# EUROPÄISCHE PATENTSCHRIFT

(11) **EP 2 035 737 B1**
(45) Veröffentlichungstag und Bekanntmachung des Hinweises auf die Patenterteilung: **18.08.2010**
(21) Anmeldenummer: 07725987.7
(22) Anmeldetag: 13.06.2007
(51) Int. Cl.: F16L 23/036

(54) **MANSCHETTE ZUM VERBINDEN VON ZWEI JEWEILS MIT EINEM ABSCHLUSSKRAGEN AUSGEBILDETEN ROHREN**
COLLAR FOR JOINING TWO PIPES COMPRISING ONE RESPECTIVE CONNECTING NECK
COLLIER DESTINÉ AU RACCORDEMENT DE DEUX TUBES PRÉSENTANT CHACUN UNE COLLERETTE DE RACCORDEMENT

(30) Priorität: 22.06.2006 DE 102006028605
(43) Veröffentlichungstag der Anmeldung: 18.03.2009
(73) Patentinhaber: A. Raymond et Cie., 38000 Grenoble (FR)
(72) Erfinder: BELLANTI, Bruno, 38400 Saint Martin d'Hères (FR)
(74) Vertreter: Rüttgers, Joachim
(86) Internationale Anmeldenummer: PCT/EP2007/005190
(87) Internationale Veröffentlichungsnummer: WO 2007/147510

(56) Entgegenhaltungen:
- EP-A1- 1 429 066
- FR-A- 850 019
- FR-A- 2 856 770

## Beschreibung

Die Erfindung betrifft eine Manschette zum Verbinden von zwei jeweils mit einem Abschlusskragen ausgebildeten Rohren.

DE 30 35 669 A1 offenbart ein Gerät mit mindestens zwei mittels eines Rasthakens lösbar miteinander verbundenen Teilen. Bei diesem Gerät weist ein erstes Teil eine Rastkante und ein zweites Teil einen Rasthaken mit einer elastisch hinter die Rastkante eingerasteten Rastnase auf. Die Rastnase ist durch Verschiebung quer zu ihrer Einrastrichtung aus ihrer Raststellung in eine Öffnungsstellung außer Eingriff mit der Rastkante bringbar, wobei sie in dieser Öffnungsstellung durch eine Rasteinrichtung gegen eine Querverschiebung zurück in die Raststellung gesichert ist. Dadurch sind die Teile verhältnismäßig einfach voneinander lösbar, ohne dass hierfür ein hoher Montageaufwand oder Spezialwerkzeuge erforderlich sind.

FR 2 856 770 A1 offenbart eine Manschette zum Verbinden von zwei jeweils mit einem Abschlusskragen ausgebildeten Rohren, die über zwei radial nach außen vorstehende Zungen verfügt, welche nach Anordnen der Manschette um die Abschlusskragen an einem Aufnahmegehäuse ausgebildete Rastnasen hintergreifen. Allerdings ist das Lösen dieser Manschette verhältnismäßig aufwändig, da die Rasthaken innerhalb des Aufnahmegehäuses angeordnet und daher nur schlecht zugänglich sind.

Der Erfindung liegt die Aufgabe zugrunde, eine Manschette zum Verbinden von zwei jeweils mit einem Abschlusskragen ausgebildeten Rohren anzugeben, die ein verhältnismäßig einfaches Lösen der Rohre bereitstellt.

Diese Aufgabe wird bei einer Manschette zum Verbinden von zwei jeweils mit einem Abschlusskragen ausgebildeten Rohren mit den Merkmalen des Patentanspruches 1 gelöst.

Die erfindungsgemäße Manschette ist über die Abschlusskragen der zu verbindenden Rohre aufschiebbar, wobei in einer Verriegelungsstellung die Eingriffskralle nach Auffedern des Federarmes in die in einen Abschlusskragen eingebrachte Verriegelungsausnehmung eingreift und dadurch die Manschette gegen unbeabsichtigtes Entfernen sichert. Um die Manschette wieder zu entfernen, muss der Federarm unter Eingriff eines entsprechend eingerichteten Werkzeuges mit dem Freigabeelement entgegen der Einfederrichtung geschwenkt werden, bis der Eingriff der Eingriffskralle mit der Verriegelungsausnehmung gelöst ist und die Manschette wieder abgezogen werden kann. Diese Manipulation ist zwar einfach durchzuführen, muss jedoch gezielt vorgenommen werden, um die Verbindung zu lösen.

Weitere zweckmäßige Ausgestaltungen der Erfindung sind Gegenstand der Unteransprüche.

Weiter zweckmäßige Ausgestaltungen und Vorteile der Erfindung ergeben sich aus der nachfolgenden detaillierten Beschreibung eines Ausführungsbeispiels der Erfindung mit Bezug auf die Figuren der Zeichnung, bei denen
- Fig. 1: eine perspektivische Ansicht eines Ausführungsbeispiels einer erfindungsgemäßen Manschette und zweier mit Ab- schlusskragen ausgebildeten Rohre ist,
- Fig. 2: in einer perspektivischen Ansicht das Ausführungsbeispiel gemäß Fig. 1 mit der auf die Abschlusskragen aufgescho- benen erfindungsgemäßen Manschette darstellt und
- Fig. 3: im Schnitt den Eingriff einer Eingriffskralle der erfindungs- gemäßen Manschette mit einer in einem Abschlusskragen ausgebildeten Verriegelungsausnehmung darstellt.

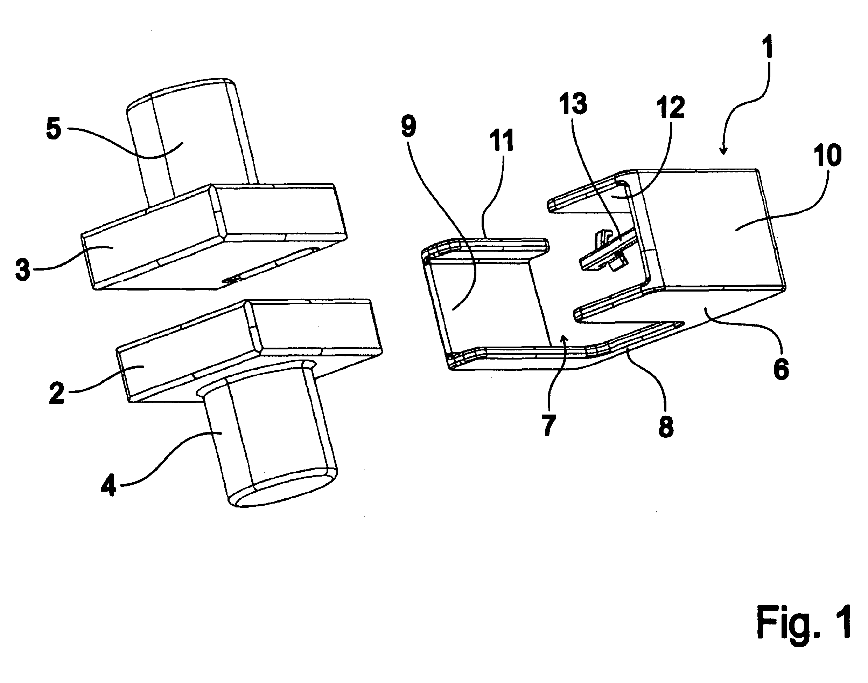

Fig. 1 zeigt in einer perspektivischen Ansicht ein Ausführungsbeispiel einer erfindungsgemäßen Manschette 1 zum Verbinden von zwei jeweils mit einem Abschlusskragen 2, 3 ausgebildeten zylinderförmigen Rohren 4, 5. Bei dem erläuterten Ausführungsbeispiel weisen die Abschlusskragen 2, 3 eine rechteckförmige Gestalt auf und stehen radial über die Rohre 4, 5 über.

Die aus einem spritzgegossenen Kunststoff oder einem gestanzten und gebogenen Metallblech hergestellte Manschette 1 verfügt über eine flache Basisplatte 6, die mit einer einseitig offenen Rohraufnahmeausnehmung 7 ausgebildet ist. Die Rohraufnahmeausnehmung 7 erstreckt sich von ihrer geöffneten Seite in Längsrichtung der Manschette 1 bis zu einem querstehenden Abschlusssteg 8 und weist eine Weite auf, die dem Außendurchmesser beispielsweise des ersten Rohres 4 entspricht. An den parallel zur Längsrichtung der Manschette 1 ausgerichteten gegenüberliegenden Randseiten der Basisplatte 6 sind bei diesem Ausführungsbeispiel vollflächige Seitenwände 9, 10 angeformt, die rechtwinklig zu der Basisplatte 6 ausgerichtet sind und sich in jeweils gleicher Richtung über einen Abstand von der Basisplatte 6 erstrecken, der der Dicke der Abschlusskragen 2, 3 in Längsrichtung der Rohre 4, 5 entspricht.

An den von der Basisplatte 6 abgewandten Enden der Seitenwände 9, 10 sind parallel zu der Basisplatte 6 ausgerichtete, sich aufeinander zu erstreckende Deckplatten 11, 12 angeformt, deren von den Seitenwänden 9, 10 abgewandten Stirnseiten einen Abstand voneinander aufweisen, der dem Außendurchmesser des zweiten Rohres 5 und bei gleichartig ausgebildeten Rohren 4, 5 auch der Weite der Rohraufnahmeausnehmung 7 entspricht. Weiterhin lässt sich aus Fig. 1 erkennen, dass die Manschette 1 über einen im Quer schnitt rechteckförmigen oder quadratischen Federarm 13 verfügt, der in einem Abstand von der Basisplatte 6 angeordnet ist und sich bei dem in Fig. 1 dargestellten Ausführungsbeispiel von der zweiten Seitenwand 10 in Richtung der ersten Seitenwand 9 erstreckt und in Querrichtung etwa in der Mitte der Rohraufnahmeausnehmung 7 über der Rohraufnahmeausnehmung 7 endet.

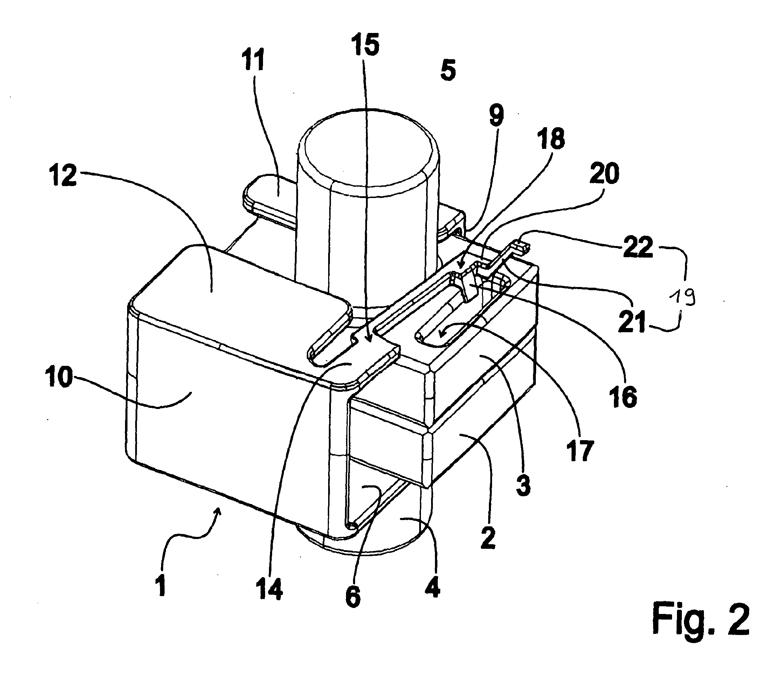

Fig. 2 zeigt in einer perspektivischen Ansicht das Ausführungsbeispiel gemäß Fig. 1 mit der über die zusammengefügten Abschlusskragen 2, 3 aufgeschobenen Manschette 1 mit Blick auf die Deckplatten 11, 12. Aus Fig. 2 ist ersichtlich, dass der Federarm 13 über einen sich von der zweiten Seitenwand 10 in Richtung der ersten Seitenwand 9 erstreckenden, in einem Abstand von der entsprechenden Deckplatte 12 angeordneten Ansatzabschnitt 14 mit der zweiten Seitenwand 10 verbunden ist, wobei der Ansatzabschnitt 14 einen größeren Querschnitt als der Federarm 13 aufweist. Dadurch ist der Ansatzabschnitt 14 merklich biegesteifer als der Federarm 13 ausgebildet, so dass der Federarm 13 in einem Flexionsbereich 15, der an dem Übergang von dem Federarm 13 zu dem Ansatzabschnitt 13 liegt, federnd in Richtung der Basisplatte 6 und von dieser weg schwenkbar ist.

In einem nicht ausgeführten Ausführungsbeispiel weist ein mit einem rechteckigen Querschnitt ausgebildeter Federarm 13 in der Ebene der Deckplatten 11, 12 eine größere Materialstärke als in einer rechtwinklig zu dieser Ebene ausgerichteten Richtung auf, so dass zum Schwenken des Federarms 13 auf die Basisplatte 6 zu beziehungsweise von dieser weg deutlich geringere Kräfte aufzuwenden sind als für ein Verbiegen des Federarmes 13 in der Ebene der Deckplatten 11, 12.

Weiterhin lässt sich Fig. 2 deutlich entnehmen, dass an dem Federarm 13 in etwa in der Mitte zwischen den aufeinander zu weisenden Randseiten der Deckplatten 11, 12 eine Eingriffskralle 16 in Gestalt eines schräg von der offenen Seite der in Fig. 2 nicht sichtbaren Rohraufnahmeausnehmung 7 abgewandten Zungenabschnitts angeformt ist, der in der Anordnung gemäß Fig. 2 in eine in den zweiten Abschlusskragen 3 und vorzugsweise auch in dem ersten Abschlusskragen 2 ausgebildete Verriegelungsausnehmung 17 eingreift.

An dem dem Flexionsbereich 15 gegenüberliegenden Endabschnitt 18 des Federarmes 13 ist im Bereich der Eingriffskralle 16 ein Freigabeelement 19 angeformt, das bei dem dargestellten Ausführungsbeispiel einen rechtwinklig an den Federarm 13 angeformten, sich in Längsrichtung der Manschette 1 erstreckenden Längsabschnitt 20, einen an den Längsabschnitt 20 angesetzten, sich schräg von der Basisplatte 6 sowie den Deckplatten 11, 12 weg erstreckenden Schrägabschnitt 21 und einen sich von dem Längsabschnitt 20 abgewandten Ende des Schrägabschnittes 21 in einer Ebene parallel zu den Deckplatten 11, 12 weg von den Deckplatten 11, 12 erstreckenden Betätigungsabschnitt 22 aufweist.

Der Betätigungsabschnitt 22 verfügt über eine der Basisplatte 6 zugewandte, bei dem dargestellten Ausführungsbeispiel plane Werkzeugansatzfläche, so dass der Federarm 13 beispielsweise durch Anlage der Klinge eines in Fig. 2 nicht dargestellten Schraubendrehers an die Werkzeugansatzfläche und Bewegen der Klinge des Schraubendrehers von der Basisplatte 6 weg der Eingriff zwischen der Eingriffskralle 16 und der Verriegelungsausnehmung 17 lösbar ist, so dass die Abschlusskragen 2, 3 ohne weiteres durch eine Relativbewegung zwischen der Manschette 1 und den Abschlusskragen 2, 3 in Längsrichtung der Manschette 1 in Richtung der offenen Seite der Rohraufnahmeausnehmung 7 die Rohre 4, 5 wieder voneinander lösbar sind.

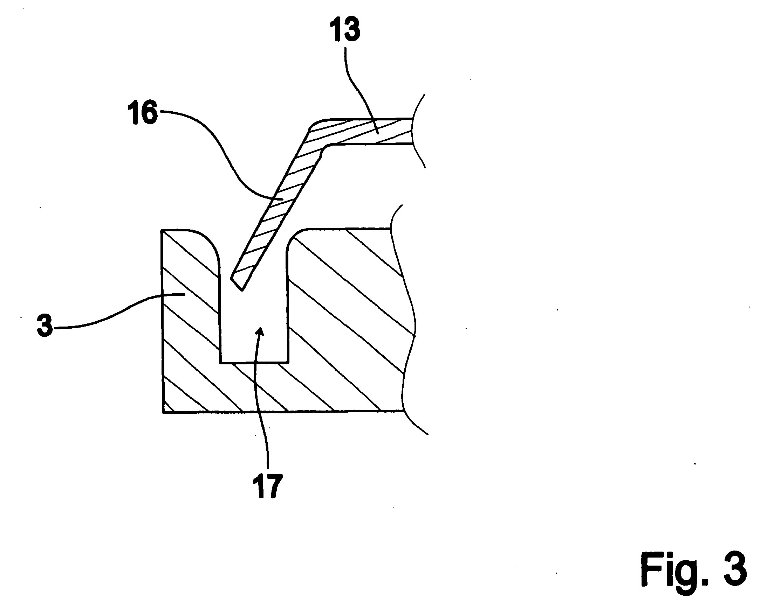

Fig. 3 zeigt im Schnitt den Eingriff der Eingriffskralle 16 in die Verriegelungsausnehmung 17 in der Anordnung gemäß Fig. 2. Aus Fig. 3 ist ersichtlich, dass durch die Schrägstellung der Eingriffskralle 16 eine Bewegung des Abschlusskragens 3 in die Längsrichtung der Einführrichtung in die Manschette 1 aufgrund dieser Bewegungsrichtung entgegenwirkenden Schrägstellung, jedenfalls bis zum Einwirken derart hoher Kräfte, blockiert ist, die den Federarm 13 oder die Eingriffskralle 16 zerstören würden, während bei einer Bewegung in Einführrichtung die Federkralle 16 an der in der Einführrichtung vorne liegenden Randseite des zweiten Abschlusskragens 3 auffedert.

## Patentansprüche

1. Manschette zum Verbinden von zwei jeweils mit einem Abschlusskragen (2, 3) ausgebildeten Rohren (4, 5) mit einer Basisplatte (6), die eine einseitig offene Rohraufnahmeausnehmung (7) zur Aufnahme eines ersten Rohres (4) aufweist, mit zwei an gegenüberliegenden Seiten parallel zu der Rohraufnahmeausnehmung (7) an die Basisplatte (6) angesetzten Seitenwänden (9, 10), mit zwei jeweils an einer Seitenwand (9, 10) angesetzten Deckplatten (11, 12), zwischen denen ein zweites Rohr (5) einfügbar ist, **dadurch gekennzeichnet, daß** die Manschette einen mit einer Seitenwand (10) verbundenen, in Richtung der Basisplatte (6) und von dieser weg in einem Flexionsbereich (15) federnd schwenkbaren Federarm (13), der sich in Richtung der gegenüberliegenden Seitenwand (9) erstreckt, wobei der Federarm (13) eine sich in Richtung der Basisplatte (6) erstreckende, zum Eingriff in eine in wenigstens einem Abschlusskragen (2, 3) eingebrachte Verriegelungsausnehmung (17) ausgebildete Eingriffskralle (16) und ein sich von der Basisplatte (6) weg erstreckendes Freigabeelement (19) aufweist.

2. Manschette nach Anspruch 1, **dadurch gekennzeichnet, dass** der Federarm (13) einen rechteckigen Querschnitt aufweist.

3. Manschette nach Anspruch 2, **dadurch gekennzeichnet, dass** der Federarm (13) in der Ebene der Deckplatten (11, 12) eine größere Materialstärke als in der rechtwinklig zu dieser Ebene ausgerichteten Richtung aufweist.

4. Manschette nach einem der Ansprüche 1 bis 3, **dadurch gekennzeichnet, dass** der Federarm (13) an einem an die Seitenwand (10) angeformten Ansatzabschnitt (14) angesetzt ist, der biegesteifer als der Federarm (13) ausgebildet ist.

5. Manschette nach einem der Ansprüche 1 bis 4, **dadurch gekennzeichnet, dass** die Eingriffskralle (16) als ein flacher Zungenabschnitt ausgebildet ist.

6. Manschette nach Anspruch 5, **dadurch gekennzeichnet, dass** sich der Zungenabschnitt schräg von der offenen Seite der Rohraufnahmeausnehmung (7) weg weisend in Richtung der Basisplatte (6) erstreckt.

7. Manschette nach einem der Ansprüchen 1 bis 6, **dadurch gekennzeichnet, dass** das Freigabeelement (19) einen parallel zu der Basisplatte (6) ausgerichteten Betätigungsabschnitt (22) aufweist.

8. Manschette nach Anspruch 7, **dadurch gekennzeichnet, dass** der Betätigungsabschnitt (22) an seine der Basisplatte (6) zugewandten Seite eine plane Werkzeugansatzfläche aufweist.

## Claims

1. Collar for joining two pipes (4, 5) which are each formed with a flange (2, 3), comprising a base plate (6) which has a pipe-receiving recess (7) open on one side and intended for receiving a first pipe (4), comprising two side walls (9, 10) attached to the base plate (6) on opposite sides parallel to the pipe-receiving recess (7), comprising two cover plates (11, 12) which are each attached to a side wall (9, 10) and between which a second pipe (5) can be inserted, **characterized in that** the collar has a spring arm (13) which is connected to a side wall (10) and is pivotable under spring force in the direction of the base plate (6) and away from said base plate in a flexion region (15) and which extends in the direction of the opposite side wall (9), the spring arm (13) having an engaging claw (16), extending in the direction of the base plate (6) and formed for engaging a locking recess (17) introduced into at least one flange (2, 3), and a release element (19) extending away from the base plate (6).

2. Collar according to Claim 1, **characterized in that** the spring arm (13) has a rectangular cross-section.

3. Collar according to Claim 2, **characterized in that** the spring arm (13) has a greater material thickness in the plane of the cover plates (11, 12) than in the direction oriented at right angles to this plane.

4. Collar according to any of Claims 1 to 3, **characterized in that** the spring arm (13) is attached to an attachment section (14) which is formed on the side wall (10) and is more rigid than the spring arm (13).

5. Collar according to any of Claims 1 to 4, **characterized in that** the engagement claw (16) is in the form of a flat tongue section.

6. Collar according to Claim 5, **characterized in that** the tongue section extends obliquely away from the open side of the pipe-receiving recess (7) in the direction of the base plate (6).

7. Collar according to any of Claims 1 to 6, **characterized in that** the release element (19) has an actuation section oriented parallel to the base plate (6).

8. Collar according to Claim 7, **characterized in that** the actuation section (22) has a planar tool application surface on its side facing the base plate (6).

## Revendications

1. Manchon destiné à raccorder deux éléments tubulaires (4, 5) respectivement munis d'une collerette d'extrémité (2, 3), se composant d'une plaque de base (6), qui comporte une ouverture d'insertion de tube (7) ouverte sur un côté, destinée à l'insertion d'un premier élément tubulaire (4), de deux parois latérales (9, 10) diamétralement opposées attenantes à la plaque de base (6) selon une disposition parallèle à l'ouverture d'insertion de tube (7), de deux plaques de recouvrement (11, 12) respectivement attenantes à une des parois latérales (9, 10), entre lesquelles un deuxième élément tubulaire (5) peut être inséré, **caractérisé en ce que** la manchon comporte une pattes élastique (13) raccordée à une paroi latérale (10) susceptible de basculer par cèdage élastique, au niveau d'une portion de flexion (15), dans la direction de la plaque de base (6) et dans la direction opposée à celle-ci, qui s'étend dans la direction de la paroi latérale diamétralement opposée (9), la patte élastique (13) comprenant en l'occurrence une griffe de cramponnement (16) s'étendant dans la direction de la plaque de base (6), destinée à venir s'insérer en prise d'encastrement dans un évidement de verrouillage (17) ménagé dans au moins une collerette d'extrémité (2,3) et un organe de libération (19) s'étendant depuis la plaque de base (6).

2. Manchon selon la revendication 1, **caractérisé en ce que** la patte élastique (13) a une section transversale de forme rectangulaire.

3. Manchon selon la revendication 2, **caractérisé en ce que** la patte élastique (13) a, dans le plan des plaques de recouvrement (11, 12), une épaisseur plus importante que dans la direction perpendiculaire à ce plan.

4. Manchon selon l'une des revendications 1 à 3, **caractérisé en ce que** la patte élastique (13) est réalisée attenante à une portion formant épaulement solidaire par formage de la paroi latérale (10), qui présente une résistance à la flexion plus élevée que celle de la patte élastique (13).

5. Manchon selon l'une des revendications 1 à 4, **caractérisé en ce que** la griffe de cramponnement (16) se présente sous la forme d'une languette plate.

6. Manchon selon la revendication 5, **caractérisé en ce que** la portion formant languette s'étend, depuis le côté ouvert de l'ouverture d'insertion de tube (7) selon une disposition oblique en direction de la plaque de base (6).

7. Manchon selon l'une des revendications 1 à 6, **caractérisé en ce que** l'organe de libération (19) comporte une portion d'actionnement (22) orientée parallèlement à la plaque de base (6).

8. Manchon selon la revendication 7, **caractérisé en ce que** la portion d'actionnement (22) comporte, au niveau de son côté orienté vers la plaque de base (6), une portée plane pour l'application d'un outil.
